# EUROPEAN PATENT SPECIFICATION

(11) **EP 3 921 521 B1**
(45) Date of publication and mention of the grant of the patent: **10.09.2025**
(21) Application number: 20703205.3
(22) Date of filing: 31.01.2020
(51) Int. Cl.: F01N 3/20

(54) **A CONTROL SYSTEM FOR A DIESEL EXHAUST FLUID DELIVERY SYSTEM**
STEUERSYSTEM FÜR EIN DIESELABGASFLUIDZUFUHRSYSTEM
SYSTÈME DE COMMANDE POUR SYSTÈME DE DISTRIBUTION DE FLUIDE D'ÉCHAPPEMENT DIESEL

(30) Priority: 05.02.2019 GB 201901585
(43) Date of publication of application: 15.12.2021
(73) Proprietor: PHINIA Delphi Luxembourg SARL, 4367 Belvaux (LU)
(72) Inventor: SYKES, Martin, A., Rainham Kent ME8 0HY (GB); KNOWLES, Peter, Herne Bay Kent CT6 6RF (GB)
(74) Representative: Keltie LLP
(86) International application number: PCT/EP2020/052493
(87) International publication number: WO 2020/161022

(56) References cited:
- US-A1- 2009 112 363
- US-A1- 2009 293 457

## Description

### TECHNICAL FIELD

The present invention relates to a controller for a diesel exhaust fluid delivery system. The invention also relates to a method of controlling a diesel exhaust fluid delivery system and to a diesel exhaust fluid delivery system comprising a controller and a diesel exhaust fluid injector.

### BACKGROUND

It is known to provide fluid delivery systems for conveying exhaust fluid into an exhaust after treatment system of a vehicle. Diesel Exhaust Fluid (DEF) is a non-toxic fluid composed of purified water and automotive grade aqueous urea. The DEF is used by the exhaust after treatment system to break down NOx gases which are produced upstream during engine combustion. The exhaust after treatment system helps to ensure that the vehicle NOx emissions are maintained below regulated levels.

DEF is typically injected, or sprayed, into the vehicle exhaust stream by an injector which is located upstream from a selective catalytic reduction (SCR) catalyst. The injector is operable to inject DEF into the exhaust system whilst a pump is typically provided to pump DEF from a source tank to the injector via a feed line. The DEF pump is controlled in such a way as to maintain a regular supply of DEF to the injector. The injected DEF decomposes in the SCR catalyst into ammonia and carbon dioxide. The ammonia in the DEF then reacts with NOx in the exhaust gases to form nitrogen and water. The catalytic reaction that occurs within the SCR thereby helps to reduce the level of NOx in the vehicle's emissions.

Government legislation has been established to promote the use of monitoring systems, which provide vehicle users with an indication as to whether the DEF delivery system is functioning properly. Over time, the injector can become blocked, or clogged, with particulates which thereby limits the flow of DEF into the exhaust system. The injector is subjected to high temperatures due to its positioning within the exhaust system. Consequently, it is difficult and expensive to provide sensors which can directly monitor the performance of the injector over the life of the DEF supply system.

Systems which are provided to monitor the performance of the DEF delivery system are typically arranged to monitor the operating conditions of the pump, which can be used to approximate an estimated output of the DEF delivery system. However, the DEF pump is operated independently from the injector, which makes it difficult for the monitoring system to provide a reliable estimate of the flow rate of DEF being injected into the exhaust system.

Therefore, such DEF delivery monitoring systems are unable to accurately determine whether a vehicle's DEF delivery system is functioning within acceptable operating limits, or even to determine how a vehicle's DEF delivery system deteriorates over time. It is an aim of the present invention to address the disadvantages associated with the known DEF delivery monitoring systems.

By way of background to the present invention, US 2009/0112363 A1 describes an adaptive control method for reagent distribution in SCR reactors. The method involves determining an influence coefficient for each injection nozzle independently of the other injection nozzles and optimising the flow of reagent to minimise a sum of deviation across a surface of the catalyst. US 2009/0293457 A1 describes a system and method for controlling NOx reactant supply based on the use of a virtual sensor network. The virtual sensor network may be coupled with physical sensors, such as a NOx emission sensor, to provide control functionality.

### SUMMARY OF INVENTION

According to an embodiment of the invention there is provided a diesel emission fluid (DEF) delivery system controller for diagnosing the operation of a diesel emission fluid (DEF) delivery system, the DEF delivery system comprising a source of DEF connected to an injector for injecting DEF into a vehicle exhaust after-treatment system, the controller comprising: an input arranged to receive a pressure sensor signal indicative of the pressure of DEF within the DEF delivery system; a monitoring module arranged to monitor a measurable parameter of the pressure sensor signal; a calibration module arranged to calibrate the measurable parameter based on a determined characteristic of the DEF delivery system to determine a calibrated parameter of the pressure sensor signal; a determination module arranged to determine a predicted DEF flow-rate being injected into the exhaust after-treatment system based on the calibrated parameter of the pressure sensor signal; a diagnostic module arranged to determine a diagnostic signal to indicate an operating condition of the injector based on a comparison between the predicted DEF flow-rate and a threshold DEF flow-rate value corresponding to a normal operation state for the DEF delivery system; and an output arranged to output the diagnostic signal.

The controller is advantageously arranged to calibrate the measured parameter of the input signal so as to provide a more accurate prediction of the DEF flow rate. The resulting flow rate prediction is used by the diagnostic module to determine an enhanced indication as to the operating state of the DEF delivery system. Thus, the controller provides a convenient means of detecting whether the exhaust after treatment system is able to sufficiently remove NOx from the engine exhaust gases of the vehicle.

The measurable parameter comprises a moving root mean squared (RMS) value of the pressure sensor signal. The RMS value is a continuously variable value of the pressure sensor signal which can be dynamically monitored by the controller.

The determined characteristic comprises a minimum RMS value corresponding to when a demand for the flow of DEF by the vehicle exhaust after-treatment system is at a minimum threshold value.

The minimum DEF flow demand condition may be associated with a situation wherein the injector of the DEF delivery system is not operable to supply DEF to the exhaust system. Consequently, any identifiable features of the measurable parameter can be attributed to the operation of other components of the DEF delivery system (e.g. a DEF supply pump).

The calibration module is arranged to subtract the minimum RMS value from the moving RMS value in order to determine the calibrated parameter. The subtraction of the minimum RMS value enables the controller to conveniently isolate potential outliers and errors from the input signal.

The calibration module is arranged to determine the minimum RMS value by measuring the moving RMS value over a predetermined period when the DEF flow demand is substantially less than 10 mg/s. This may correspond to a condition of the DEF delivery system wherein there is minimal demand for DEF to be injected into the exhaust. The DEF flow demand below such a level may correspond to a RMS value that relates to a background state of operation for the DEF delivery system.

The calibration module may be arranged to determine the minimum RMS value when the DEF flow demand is substantially less than 5 mg/s or, alternatively 1 mg/s.

According to a further embodiment of the invention there is provided a diesel emission fluid (DEF) delivery system controller for diagnosing the operation of a diesel emission fluid (DEF) delivery system, the DEF delivery system comprising a source of DEF connected to an injector for injecting DEF into a vehicle exhaust after-treatment system, the controller comprising: an input arranged to receive a pressure sensor signal indicative of the pressure of DEF within the DEF delivery system; a monitoring module arranged to monitor a measurable parameter of the pressure sensor signal; a calibration module arranged to calibrate the measurable parameter based on a determined characteristic of the DEF delivery system to determine a calibrated parameter of the pressure sensor signal; a determination module arranged to determine a predicted DEF flow-rate being injected into the exhaust after-treatment system based on the calibrated parameter of the pressure sensor signal; a diagnostic module arranged to determine a diagnostic signal to indicate an operating condition of the injector based on a comparison between the predicted DEF flow-rate and a threshold DEF flow-rate value corresponding to a normal operation state for the DEF delivery system; and an output arranged to output the diagnostic signal.

The measurable parameter comprises an amplitude value corresponding to the change in pressure during injection of DEF into the vehicle exhaust after-treatment system by the injector. The injection of the DEF may refer to a period of injection (i.e. when the injector is actuated to enable DEF to flow into the exhaust system). The injection of DEF may also refer to a time period between two discreet injection events.

The calibration module is arranged to apply a scaler function to the amplitude value in order to calculate a mass of DEF being injected by the injector during each injection event.

The scaler may comprise information indicative of the mass of DEF being injected by the injector as a function of the injector duty cycle. The calibration module may be arranged to determine the scaler function from a lookup table.

The determination module may be arranged to determine the flow-rate of DEF as a function of a particular injection period, which may represent the period of time that the injector is configured in the open position, as a proportion of the total time that the injector is activated by the controller. The resulting DEF flow-rate may take into account period when the injector is activated, but not open, which thereby defines a more accurate representation of the mass of DEF that is passing through the DEF delivery system over a given time period.

A controller according to any of the preceding paragraphs may be provided in combination with a pressure sensing means for providing the pressure sensor signal to the controller. The input of the controller may be configured to receive a pressure sensor signal comprising pressure sensor information associated with the pressure of DEF flowing within a conduit that connects the DEF source to the injector.

The diagnostic module may be arranged to control a display means to, in the event that the determined flow rate deviates from a predetermined flow rate, indicate an operating state of the injector. The diagnostic module is able to advantageously communicate to a user of the vehicle that the DEF delivery system is operating in a sub-optimal condition.

The controller may further comprise a command module arranged to determine a command signal for controlling the injector based on the determined flow-rate, wherein the output may be arranged to output the command signal to the injector. The command module may control the operation of the injector in order compensate for the sub-optimal operation of the DEF delivery system by adjusting the output of the DEF into the exhaust system. The controller may be arranged to output a command signal for controlling the operation of other components of the DEF delivery system, including a feed line pump, for example.

According to a further aspect of the present invention, there is provided a DEF delivery system comprising an injector and a controller according to any one of the preceding paragraphs.

According to a yet further aspect of the present invention, there is provided a method of diagnosing the operation of a diesel emission fluid (DEF) delivery system comprising a source of DEF connected to an injector for injecting DEF into a vehicle exhaust after-treatment system, the method comprising: receiving a pressure sensor signal indicative of the pressure of DEF within the DEF delivery system; monitoring a measurable parameter of the pressure sensor signal; calibrating the measurable parameter based on a determined characteristic of the DEF delivery system to determine a calibrated parameter of the pressure sensor signal; determining a flow-rate of the DEF being injected into the exhaust after-treatment system based on the calibrated parameter of the pressure sensor signal; and diagnosing an operating condition of the injector based on a comparison between the determined DEF flow-rate and a threshold DEF flow-rate value corresponding to a normal operation state for the DEF delivery system.

The measurable parameter comprises a moving root mean squared (RMS) value of the pressure sensor signal. The determined characteristic comprises a minimum RMS value corresponding to when a demand for the flow of DEF by the vehicle exhaust after-treatment system is at a minimum threshold value.

Calibrating the measurable parameter comprises subtracting the minimum RMS value from the moving RMS value to determine the calibrated parameter value. The effect of subtracting the minimum RMS value is to advantageously calibrate the moving RMS value against a minimum condition of the DEF delivery system corresponding to when a minimum level of DEF is required by the vehicle exhaust system.

Calibrating the measurable parameter comprises determining the minimum RMS value by measuring the moving RMS value over a predetermined period when the DEF flow demand is less than 10 mg/s. In embodiments, the minimum RMS value when the DEF flow demand is substantially less than 5 mg/s or, alternatively 1 mg/s.

According to a yet further aspect of the present invention, there is provided a method of diagnosing the operation of a diesel emission fluid (DEF) delivery system comprising a source of DEF connected to an injector for injecting DEF into a vehicle exhaust after-treatment system, the method comprising: receiving a pressure sensor signal indicative of the pressure of DEF within the DEF delivery system; monitoring a measurable parameter of the pressure sensor signal; calibrating the measurable parameter based on a determined characteristic of the DEF delivery system to determine a calibrated parameter of the pressure sensor signal; determining a flow-rate of the DEF being injected into the exhaust after-treatment system based on the calibrated parameter of the pressure sensor signal; and diagnosing an operating condition of the injector based on a comparison between the determined DEF flow-rate and a threshold DEF flow-rate value corresponding to a normal operation state for the DEF delivery system.

The measurable parameter comprises an amplitude value corresponding to the change in pressure during an injection of DEF into the vehicle exhaust after-treatment system by the injector.

Calibrating the measurable parameter comprises applying a scaler function to the amplitude value in order to calculate a mass of DEF being injected by the injector during each injection event. The scaler function may comprise information indicative of the mass of DEF being injected by the injector as a function of the injector duty cycle.

The step of calibrating the measurable parameter may comprise determining the scaler function from a lookup table. The pressure sensor signal may comprise pressure sensor information associated with the pressure of DEF flowing within a conduit that connects the DEF source to the injector.

The method may comprise controlling, in the event that the determined flow rate deviates from a predetermined flow rate, a display means to indicate an operating state of an injector to inject DEF into the vehicle exhaust after-treatment system based on the determined DEF flow-rate.

It will be appreciated, however, that other arrangements are also useful, and therefore, the present invention is not intended to be limited to any particular arrangement. In any event, the set of instructions (or method steps) described above may be embedded in a computer-readable storage medium (e.g. a non-transitory storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM ad EEPROM); flash memory; or electrical or other types of medium for storing such information/instructions.

It will be appreciated that the foregoing represents only some of the possibilities with respect to the particular subsystems of a DEF delivery system which may be included, as well as the arrangement of those subsystems with the controller. Accordingly, it will be further appreciated that embodiments of a DEF delivery system which include other or additional subsystems and subsystem arrangements remain within the spirit and scope of the present invention. Additional sub-systems may include, for example, systems relating to the operation of a vehicle exhaust system.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
**Figure** 1 illustrates a Diesel exhaust fluid (DEF) delivery system and its connection to a vehicle exhaust apparatus;
**Figure** 2 illustrates a controller for controlling the DEF delivery system according to an embodiment of the invention; and
**Figure** 3 is a flow chart showing the method steps of a control method suitable for diagnosing the operational status of a DEF delivery system according to an embodiment of the invention.

### DETAILED DESCRIPTION

In the following detailed description, reference is made to the accompanying drawings which form a part hereof, and which illustrate specific embodiments of the invention. These embodiments are described in sufficient detail to enable those of ordinary skill in the art to make and use them.

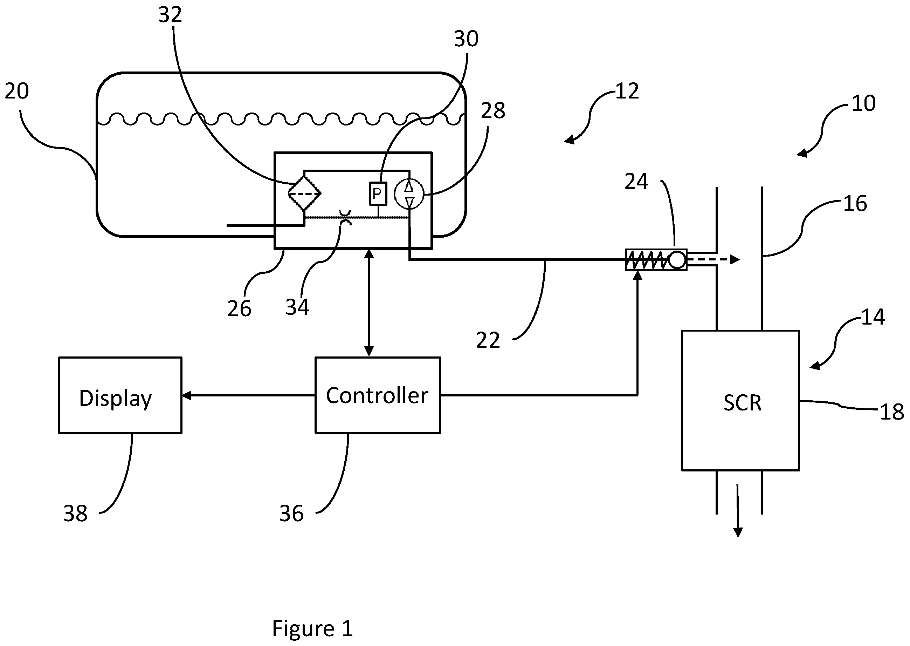

Figure 1 illustrates the basic architecture of a vehicle exhaust after-treatment system 10 configured for operation with a diesel internal combustion engine (not shown). The after treatment system comprises a diesel exhaust fluid (DEF) delivery system 12 which is arranged to deliver DEF to a selective catalytic reduction catalyst (SCR) 14 of the exhaust after treatment system 10.

The vehicle exhaust after treatment system 10 is connected to the engine and provides a conduit through which the engine's exhaust gasses are outputted from a vehicle. In this way, the vehicle exhaust treatment system 10 is fluidly connected to the engine. The exhaust after treatment system 10 includes an exhaust pipe 16 comprising a section 18 containing the SCR 14. The SCR 14 is arranged to catalyse a reaction between the DEF, which is supplied to the SCR 14 by the DEF delivery system 12, and the engine exhaust gases which flow through the SCR 14 from the engine.

Diesel Exhaust Fluid (DEF) is a non-toxic fluid composed of purified water and automotive grade aqueous urea. DEF typically comprises an aqueous urea solution made with 32.5% urea and 67.5% deionized water. During operation of the exhaust after treatment system 10, the DEF in the SCR 14 is converted into ammonia and carbon dioxide. The ammonia then reacts with NOx in the exhaust gases to form nitrogen and water, thereby reducing the levels of NOx that are subsequently exhausted from the vehicle.

The DEF delivery system 12 includes a tank 20 which is fluidly connected via a feed line 22 to an injector 24 that is fluidly connected to the exhaust pipe 16. The delivery system 12 also includes a pumping assembly 26, which is arranged to convey DEF from the source tank 20 into the feed line 22 in order to maintain a constant supply of DEF to the injector 24.

The pumping assembly 26 comprises a hydraulic pump 28, which is arranged to supply DEF fluid to, and from, the feed line 22. The pump assembly 26 is operable to automatically maintain a regular supply of DEF to the injector 24, as will be explained in more detail below.

The hydraulic pump 28 is configured to operate in a forwards and a backwards direction such that it is able to pump DEF from the tank 20 into the feed line 22 and vice versa. In this way, the pump 28 is able to supply DEF into the feed line 22 which increases the pressure of the DEF in the feed line 22.

The pump 28 is also arranged to return DEF from the feed line 22 to the tank 20, which thereby reduces the DEF pressure in the feed line 22. The pump 28 may be controlled to remove the DEF from the feed line 22, and the injector 24, during shutdown of the DEF delivery system 12 in order to prevent the DEF from freezing when the DEF delivery system 12 is not in use.

A filter 32 is arranged downstream from the pump 28. The filter 32 is arranged to prevent any solid particles in the DEF from being passed downstream to the feed line 22 and the injector 24.

The pump 28 is further connected to a return line 34 which provides a secondary connection to the source tank 20. The return line 34 includes an orifice which prevents fluid from passing through the return line 34 below a given threshold pressure value. In this way, the return line 34 operates as a pressure release mechanism which allows excess DEF to be returned to the source tank 20, rather than being transmitted to the feed line 22.

The pumping assembly 26 further comprises a pressure sensor 30 which is fluidly connected to the feed line 22 and the pump 28. The pressure sensor 30 is arranged to monitor the pressure of the DEF as it flows through the feed line 22 between the pump 28 and the injector 24. In the illustrative system shown in Figure 1, the pressure sensor 30 is shown as being located downstream from the filter 32. However, it will be appreciated by the skilled person that the pressure sensor could be arranged in a number of alternatively suitable arrangements without diverging from the scope of the present invention. For example, the pressure sensor 30 could be arranged upstream from the filter 32.

The pressure sensor 30 is arranged to measure, or monitor, the pressure of the DEF in the feed line 22 of the DEF delivery system 12. In particular, the pressure sensor 30 acts as a transducer, generating an electrical pressure signal as a function of the pressure imposed upon by the DEF in the feed line 22. The resulting pressure signal is indicative of the DEF pressure in the feed line 22.

The feed line 22 comprises a tube, or pipe, which is fluidly connected to the pumping assembly 26 at one end. Another end of the feed line 22 is connected to the injector 24. The feed line 22 thereby forms a fluid conduit between the DEF source (i.e. the tank 20) and the injector 24. The feed line 22 includes a covering (not shown) that insulates the tube in order to maintain the DEF within a pre-determined range of temperatures and pressures. The covering may be electrically heated as would be understood by a person skilled in the art.

The tank 20 is arranged in fluid connection with the pumping assembly 26 to allow DEF to be pumped to, and from, the injector 24 via the feed line 22. The DEF which is stored in the tank 20 can be periodically refilled by the vehicle operator via an access tube (not shown).

The rate at which the DEF needs replacing depends on the operating conditions of the vehicle. The relevant vehicle operating conditions may include the distance travelled by the vehicle and/or the vehicle loading parameters. For small vehicles, a typical DEF refill interval occurs around the time of a recommended engine oil change. During operation of the DEF delivery system 12, the injector 24 is operable to deliver DEF to the SCR 18 in order to nullify the NOx which is outputted from the engine.

The injector 24 comprises an injector body which is arranged in fluid communication with the exhaust pipe 16 of the exhaust after treatment system 10. The injector body has a fluid inlet for receiving DEF from the feed line 22. The injector body also comprises a fluid outlet which is arranged to deliver DEF into the exhaust pipe 16 upstream of the SCR. The injector 24 also includes a valve that opens and closes under the influence of a valve actuator, as would be readily understood by the skilled person. In particular, the valve actuator includes a solenoid mechanism which, when electrically energized and de-energized, is arranged to, respectively, open and close the injector valve.

The DEF is housed in the feed line 22 under pressure such that, when the valve is opened by the valve actuator, the DEF is urged through the fluid outlet of the injector body and out into the exhaust pipe 16. The fluid outlet is located at a position which is upstream from the SCR catalyst 14 such that the DEF, when injected into the exhaust pipe 16, is delivered to the catalyst 18 by the stream of exhaust gases that flow through the exhaust pipe 16 from the engine.

An exemplary arrangement of the injector 24 includes an impact structure (not shown) with an inclined impact surface that disperses and distributes the injected DEF into the engine exhaust stream. According to an alternative exemplary embodiment, the injector 24 further includes a shroud (not shown) that insulates the injector body from the elevated operating temperatures of the exhaust system. The shroud may be fluid cooled as would be understood by a person skilled in the art.

As shown in Figure 1, the pump assembly 26 and the injector 24 are each electronically connected to a controller 36 of the DEF delivery system 12. The controller 36 is operable as a command and control interface between the various components of the DEF delivery system 12. In this way, the controller 36 forms part of a central control system of the DEF delivery system 12. It will be appreciated by the skilled person that the controller 36 may be incorporated into any number of computer based control systems of the vehicle, such as an engine control unit (ECU), for example.

The controller 36 is arranged to control the operation of the pump assembly 26 and the injector 24 to convey DEF to the exhaust after treatment system 10 during operation of the engine. To achieve this, the controller 36 comprises a computer system for carrying out suitably prescribed processes and strategies.

During operation of DEF delivery system 12, the controller 36 is arranged to control the operation of the injector according to an injector control strategy, as will now be explained in more detail. The injector control strategy commences with the controller 36 receiving a signal which is indicative of a demand for DEF to be delivered into the engine exhaust stream. The DEF demand signal includes information relating to an operating parameter of the engine. The engine operating parameter may include an engine speed and/or throttle position. The controller 36 may also be arranged to receive DEF demand signals that are indicative of other suitable operating parameters of the engine and/or vehicle, as would be understood by the skilled person.

An increase in the engine speed results in a corresponding increase in the output of exhaust (i.e. NOx) gases from the engine. Thus, an increase in the engine's speed corresponds to the controller 36 receiving a DEF demand signal which is indicative of a need for more DEF to be delivered to the SCR 18 of the exhaust after treatment delivery system 10. Accordingly, the increased demand for more DEF corresponds with the need to nullify the increased levels of NOx that are present in the exhaust gases.

The controller 36 is arranged to control the injector 24 in dependence on the DEF demand by activating the injector 24 to control delivery of DEF to SCR 18. Upon receiving the DEF demand signal, the controller 36 determines an injector command signal which is then outputted to the injector 24 in order to control the delivery of DEF into the exhaust pipe 16. In particular, the injector command signal is arranged to control the valve actuator, of the injector 24, which activates the injector valve for a given time period, thereby releasing a flow of pressurised DEF from the feed line 22.

The injector command signal comprises instructions to control the valve actuator to operate the injector valve at a determined frequency and for a determined time period. Consequently, the actuator is configured to actuate the injector valve to open and close at the pre-determined operating frequency, and for a pre-determined time period. During normal operation, the controller 36 is arranged to adjust the injection frequency injection (time) period and/or frequency values in dependence on the DEF demand it receives from the engine. For a typical injector activation event, the controller 36 controls the valve actuator to operate the injector valve at a frequency of 4Hz for an activation period of up to 250 milliseconds (ms).

As DEF is injected from the feed line 22 into the exhaust pipe 16 it causes a reduction in the pressure of the DEF in the feed line 22. The reduction in DEF pressure is related to the volume of DEF that is injected into the exhaust pipe 16 by the injector 24. The pressure of DEF in the feed line 22 must be maintained within a pre-determined range in order to enable the injector 24 to effectively deliver DEF into the exhaust pipe 16 during the subsequent activation of the injector 24. The pump assembly 26 is arranged to control the flow of DEF into the feed line 22 so that the DEF pressure in the feed line 22 can be maintained within the determined pressure. The controller 26 is arranged to control of the pump assembly 26 according to a pump control strategy, in order to maintain the DEF pressure in the feed line 22.

The pump control strategy commences with the controller 36 receiving an input signal which is indicative of the pressure of the DEF in the feed line 22. The input signal is derived directly from the pressure sensor 30. In this way, the input signal defines a pressure sensor signal. The controller 36 is arranged to control the pump assembly 26 in dependence on the pressure sensor signal either by activating or deactivating the pump 28 in order to control the flow of DEF into the feed line 22. In particular, the controller 36 is arranged to determine a pump command signal, which when outputted to the pumping assembly 26, is configured to control the pump 28 to deliver DEF into the feed line 22. The pump command signal comprises instructions to adjust the speed and/or pumping direction of the pump 28.

During a typical operation of the DEF delivery system 12, the controller 36 is arranged to activate the pump 28 upon determining that the pressure of the DEF in the feed line 22 is below a pressure of 5 bar. The pump 28 is controlled to increase the flow of DEF into the feed line 22 until the DEF pressure is greater than 5 bar, at which point the pump 28 will be de-activated by the controller 36. Accordingly, the pumping assembly 26 is arranged to co-operate with the controller 36 as a closed loop control system which is configured to maintain the pressure of the DEF in the feed line 22 within a determined range of pressure values. In this way, the controller 36 is able to automatically control the flow of DEF into the feed line (i.e. in a forward flow direction), in order to maintain the DEF pressure within the desired range. It will be appreciated by the skilled person that the controller 36 is also able to automatically control the flow of DEF, out of the feed line (i.e. in a reverse flow direction) during shutdown of the DEF delivery system 12, for example.

The above described pump control strategy and injector control strategy are optimised for controlling a DEF delivery system 12 which is functioning within acceptable operating limits. Such operating parameters would be expected of a new vehicle or for a vehicle that has recently had its DEF delivery system 12 serviced or replaced. However, the operating efficiency of the DEF delivery system 12 can deteriorate over time due to, for example, the fluid outlet of the injector 24 becoming blocked, or clogged, with particulates that are carried through the injector by the DEF. The injector outlet can also become damaged, or eroded, due to effects of the hot exhaust gases which pass through the exhaust pipe 16. Any change in the operating efficiency of the DEF delivery system 12 can result in a corresponding decrease in the amount of DEF which is delivered to the SCR 18 of the exhaust after treatment system 10, which can thereby reduce the ability of the DEF delivery system to inhibit vehicle NOx emissions.

As well as controlling the operation of the DEF delivery system 12, the controller 36 is also arranged to monitor the performance of the delivery system 12 and to diagnose what might be causing the deterioration. The controller 36 is arranged to output the results of its diagnoses to a display means which is controller to indicate the operating state of the DEF delivery system 12 to a user of the vehicle.

The display means comprises a display 38 which is electronically connected to the controller 36. The controller 36 is arranged to control the display 38 to output a series of indications to the user. The display 38 comprises any suitable display means which can be arranged to provide an indication which describes the DEF flow rate of the delivery system 12. Such an indication may include graphical representations in the form of images and/or text. Alternatively, the display means may comprise a light emitting diode (LED), which is arranged to display a characteristic illumination pattern or graphic symbol.

In order to maintain the required NOx emission levels, the DEF delivery system 12 must be monitored so as to determine whether a sufficient flow of DEF is being delivered to the SCR 18 of the exhaust after treatment system 10. Known vehicle exhaust monitoring systems are provided to monitor the operating parameters of the DEF pump, from which an approximation of the output of the DEF delivery system can be determined.

Furthermore, the DEF pump is operated in a closed loop feedback system, which is operated independently from that of the injector. The closed loop system delay the control of the pump's operation, which can produce an inaccurate impression of the actual DEF flow rate in the system. In an attempt to overcome this deficiency, known exhaust monitoring systems are arranged such that they only produce a warning notification if the system detects that the operation of the DEF pump has deviated by +/- 50% from its normal value, within predefined time period (e.g. 30 minutes). However, such warnings are only capable of providing the user with a vague understanding of how the DEF delivery system is performing. Moreover, such monitoring systems are susceptible to either underestimating or overestimating whether the DEF delivery system is functioning within acceptable operating limits.

The DEF delivery system 12 according to the present invention is arranged to address the disadvantages associated with the known monitoring systems by calculating the DEF flow rate based on an input signal which is indicative of the pressure in the feed line 22 of the delivery system and, secondly. The controller 36 is also configured to determine a calibrated parameter of the input signal in order to provide a more accurate determination of the DEF flow rate, as will be explained in more detail below.

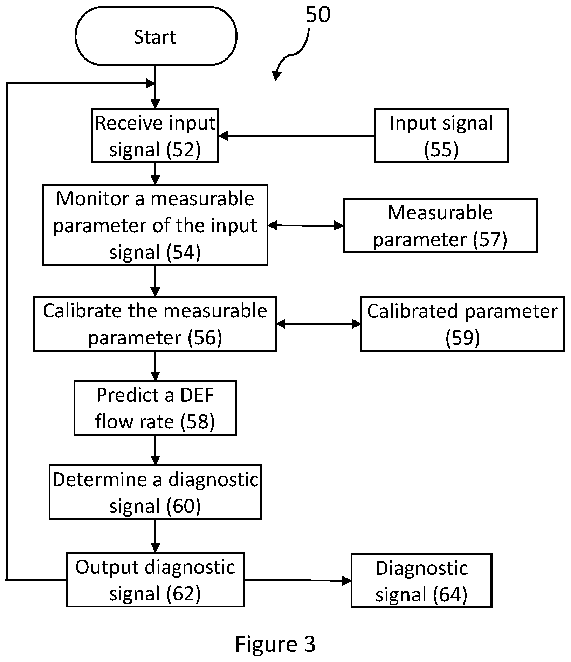

With particular reference to Figure 3, the controller 36 according to the present invention comprises a number of processing modules including a monitoring module 40, a calibration module 42, a determination module 44 and a diagnostic module 46. The controller 36 further comprises an input 48 and an output 50 for receiving and emitting signals, respectively.

The controller 36 is arranged to receive an input signal which is indicative of the pressure of the DEF which is held within the feed line 22 of the DEF delivery system 12. The input signal comprises pressure sensor information associated with the pressure of DEF flowing anywhere along the feed line 22 that connects the DEF source tank 20 to the injector 24. The pressure sensor information comprises measured pressure sensor data that is received directly from pressure sensor 30 of the pumping assembly 26. The pressure sensor information comprises a continuously varying function of pressure vs time, wherein the pressure is measured in bar and time is measured in seconds.

The monitoring module 40 is arranged to monitor the input signal and to detect a measurable parameter of the input signal. The measurable parameter is indicative of the change in the ambient pressure of the DEF in the feed line 22 due to the sum of all the forces that are applied to the DEF by the various components of the DEF delivery system 12. In particular, the measurable parameter is any scalar value which may suitably correspond to the pressure of DEF within the DEF delivery system 12. In this way, the measurable parameter is a substantially unfiltered representation of the mass of DEF that is passing through the DEF delivery system 12 over a given time period.

The calibration module 40 is arranged to determine a characteristic feature of the DEF delivery system 12. The determined characteristic corresponds to artefact in the signal that may be caused by the operation of a component of the DEF delivery system 12. For example, the determined characteristic may be caused by pressure waves in the DEF delivery system 12 which may result from the operation of the injector 24 or the pump assembly 26. The determined characteristic may, alternatively, be caused by expansion and contraction of exhaust components due to the extreme operation temperatures associated with the vehicle exhaust. It will be appreciated by the skilled person that other external factors including may also result in signal effects that define the determined characteristic of the input signal.

The determined characteristic is a scalar value, or a function, that is derived directly from the data contained within the input signal. Alternatively, the determined characteristic may be read from a lookup table of predetermined values. It will be appreciated that the determined characteristic could also be received as a separate input signal from a further processing module, as would be readily understood by the skilled person. The calibration module 42 is further configured to calibrate the measurable parameter of the input signal based on the determined characteristic.

The measurable parameter of the input signal is calibrated by the calibration module 42 to define a calibrated parameter of the input signal. The calibrated parameter represents the change in pressure of the DEF that is caused due to the actuation of the injector 24, alone. In this way, the calibrated parameter corresponds to the mass of DEF being injected from the DEF delivery system by the injector 24 over a given period. Accordingly, the calibration module 42 operates as an error calibration means, which is configured to remove characteristic errors from the input signal data in order to provide calibrated signal data that can be used to determine an accurate DEF flow rate value.

The determination module 44 is arranged to determine, or predict, a flow-rate of the DEF being injected into the exhaust after-treatment system 10 based on the calibrated parameter of the input signal. The determined flow-rate is achieved by applying a prediction function to the calibrated parameter data. The relevant prediction function is chosen by the determination module 44 such that it corresponds well with the period over which the measurable parameter is monitored. The resulting flow rate represents the mass of DEF per unit time that the injector 24 is operable to inject into the exhaust after treatment system 10.

The diagnostic module 46 is arranged to compare the determined DEF flow rate value against a predefined DEF flow rate value to determine the performance of the injector 16. The diagnostic module 46 is arranged to determine a diagnostic signal to indicate the operating condition of the delivery system. The diagnostic signal is outputted to the display 38 by the output 44 where it is used to control the operation of the display 38 in order provide a vehicle user with an indication of the operating state of the DEF delivery system 12.

The controller 36 controls the display 38 to output an indication in the event that the performance of the DEF delivery system 12 is determined to have deviated from a pre-defined condition. For example, the diagnostic module 46 is arranged determine a diagnostic signal when the determined DEF flow rate deviates from a threshold flow rate value, or range of value. The threshold flow rate value corresponds to a normal operation state for the DEF delivery system 12. The diagnostic signal is determined based on the comparison between the determined and threshold DEF flow rate values.

In this way, the diagnostic signal, when outputted to the display, causes the display to provide a visual indication to the user that the DEF delivery system 12 is operating outside its optimal range of parameters. Furthermore, the controller 36 is configured to diagnose how well the DEF is being injected into the exhaust after treatment system 10 by the delivery system 12, and also whether the injector 24 is functioning within an acceptable range of operating conditions.

During operation of the DEF delivery system 12, the controller 36 is arranged to control the display 38 to show a continuously updating indication of the state of the DEF delivery system 12, i.e. by displaying an indication of the dynamic determined flow rate in comparison to the threshold flow rate value. Alternatively, the diagnostic signal may be configured to control a means of providing an audible signal to the user.

Accordingly, the controller 36 is arranged to provide the user of the vehicle with a warning which conveniently notifies them that the supply of DEF through the injector 24 is too low, or that the DEF delivery system 12 needs to be inspected or serviced. The warning is displayed in advance of the DEF flow rate dropping below a critical level. Such a critical level may correspond with an operating condition of the exhaust after treatment system 10 for which an unacceptable amount of NOx is being emitted from the vehicle. The warning may also indicate that there is a fault with the DEF delivery system 12, or that the supply of DEF in the tank 20 is soon to be depleted.

The controller 36 is further arranged to escalate the warnings that are displayed to the user in the event that the controller 36 determines that condition of the DEF delivery system 12 is continuing to deteriorate. For example, the diagnostic signal may be outputted to an ECU where it may trigger a different engine operating mode. The diagnostic signal may even be used to control the ECU to prevent engine ignition in the event that it determines that the NOx emission levels are likely to exceed critical levels.

The controller 36 further comprises a command module 49 which is arranged to determine a command signal for controlling the injector 24 based on the determined flow-rate. The output 50 of the controller 36 is arranged to output the command signal to the injector 24 to control the output of DEF into the exhaust pipe 16 of the exhaust after treatment system 10. If the DEF flow rate drops below a predetermined threshold level (i.e. below a threshold value below which the SCR 18 is unable to sufficiently remove NOx from the engine exhaust stream) then the command module 49 is arranged to determine a command signal which controls the injector 24 to increase the DEF flow rate above what is required by the corresponding DEF flow demand.

An exemplary diagnostic control strategy, as executed by the controller 36, will now be described with reference to Figure 3. The control strategy is primarily directed towards diagnosing the operating state of the DEF delivery system 12. The strategy comprises a computer implemented control method 50 according to an embodiment of the invention.

In a first step 52 of the control method 50, the input 48 of the controller 36 receives an input signal 55 which is indicative of the pressure of the DEF that is present within the DEF delivery system 12. In a second method step 54, the monitoring module 42 monitors, or detects, a measurable parameter 57 of the input signal 55, which is supplied to the calibration module 42 for analysis.

In a third method step 56, the calibrating module 42 calibrates the measurable parameter 57 based on a determined characteristic of the DEF delivery system 12. The calibration of the measured parameter results in the determination of a calibrated parameter 59. A fourth method step 58 commences with the determination module 44 determining a flow-rate of the DEF being injected into the exhaust after-treatment system 10. The DEF flow determination is based on the calibrated parameter 59 of the input signal, as determined in the fourth method step 58.

A fifth method step 60 comprises determining a diagnostic signal 64 which is indicative of an operating condition of the injector 24. The determination of the diagnostic signal 64 is based on the determined flow-rate as calculated during the fourth method step 58. In a sixth method step 62, the diagnostic signal 64 is outputted to the display 38 to control the display 38 to indicate to a user of the vehicle, the operating state of the DEF delivery system 12.

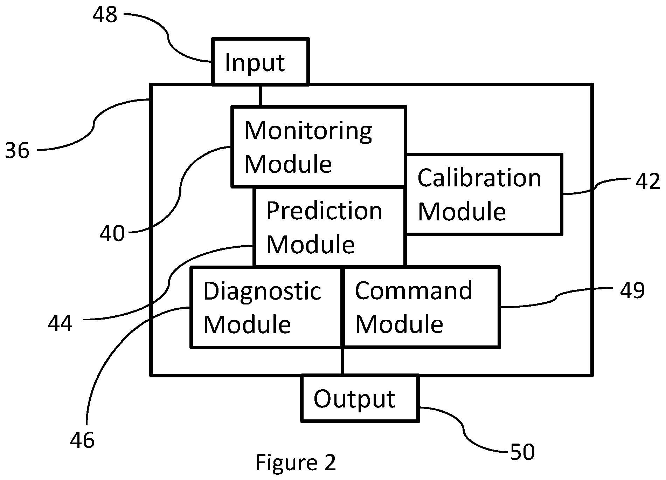

A specific configuration and operation of the controller 36, according to the present invention, will now be described with reference to Figures 2 and 3. According to this exemplary embodiment, the measurable parameter (as detected by the monitoring module 40) comprises a moving root mean squared (RMS) value of the input signal 55. The monitoring module is arranged to apply an operator to the input signal 55 in order to determine the RMS for a given time period of the signal. The monitoring module 40 is further arranged to apply the same operator over a continuous time period in order to determine the moving RMS value. Each RMS value is defined in terms of an integral of the squares of a set of instantaneous values for a given time period. Accordingly, the moving RMS value represents a continuously changing RMS value that changes over time in line with the received input signal 55.

Having monitored the moving RMS value, the calibration module 42 is arranged to determine a minimum RMS value from the moving RMS value of the input signal 55. In this way, the minimum RMS value defines the 'determined characteristic' of the DEF delivery system 12, as referred to previously. The minimum RMS value corresponds to a situation where the demand for the flow of DEF into the vehicle exhaust after-treatment system 10 is at a minimum.

Having determined the minimum RMS value, the calibration module 42 is configured to subtract the minimum RMS value from the moving RMS value in order to determine a calibrated parameter value. The calibration module 42 is arranged to determine the minimum RMS value by measuring the moving RMS value over a predetermined time period when the DEF flow demand is at, or below, a minimum threshold value. In particular, the threshold value corresponds to when the DEF flow demand from the exhaust after treatment system 10 is substantially less than 10 mg/s. Alternatively, the DEF demand threshold value is 5 mg/s or 1 mg/s.

The minimum RMS value may also be obtained from a lookup table. The lookup table may be populated with pre-determined 'minimum RMS values', which are derived from suitably controlled experiments and/or through computer modelling procedures.

The controller 36 is arranged to determine the DEF flow demand from the DEF demand signal, which is received as part of the injector control strategy as described previously. The DEF demand signal includes information relating to an operating parameter of the engine which corresponds to a demand for DEF to be delivered to the SCR 18 of the exhaust after treatment system 10. The DEF demand may also be derived indirectly from the injector command signal, which the controller 36 determines in order to control the operation of the injector 24 in dependence on the DEF demand.

Having determined the calibrated parameter value, it is communicated to the determination module 44 which is arranged to determine a predicted flow rate of DEF passing through the injector 24, as described previously.

According to the above described arrangement of the controller 36, the calibration module 42 relies upon a learning period in which the controller 36 is able to determine a 'baseline' RMS value of the input signal. The length and duration of this learning period may be set when the DEF delivery system 12 is installed in the vehicle. The learning period may be reset when, for example, the injector 24 is replaced or serviced so that the controller 36 is able to provide a more accurate indication of the operating condition of the DEF delivery system 12.

A further exemplary arrangement of the controller 36 is described herein, with reference to Figures 2 and 3, in which the measurable parameter comprises an amplitude value of the input signal. In particular, the amplitude value is derived from an oscillating pressure sensor characteristic of the input signal.

The amplitude value is defined in terms of the normalised difference between nominal upper and lower values of the continuously varying input signal. In this way, the amplitude value corresponds to a change in pressure during an injection of DEF into the vehicle exhaust system 10 caused by the activation of the injector 24 by the controller 36.

In order to calibrate the measured parameter, the calibration module 42 is arranged to first apply a scaler function to the 'pressure amplitude value'. The application of the scaler function to the measure parameter produces the calibrated parameter value. The calibrated parameter value corresponds to the mass of DEF that is injected by the injector 24 when the injector valve is arranged in its open position by the valve actuator.

The scaler function comprises information indicative of the mass of DEF that is injected by the injector 24, during each injection event, as a function of the injector's duty cycle. The duty cycle represents the period of time that the injector 24 is configured in the open position, as a proportion of the total time that the injector 24 is being activated by the controller 36.

The calibration module 42 is arranged to determine the scaler function from a lookup table, which is provided in a storage medium of the controller 36. Alliteratively, the lookup table data may be received as an input signal by the controller 36 from an external storage medium. The scaler function is configured to match the arrangement of the particular DEF delivery system 12. Furthermore, the scaler function may be suitably adapted so that it also corresponds to the specific configuration of the engine and/or the exhaust after treatment system of the vehicle.

A typical scaler function is characterised such that, for a duty cycle of 0 to 10%, the scaler function increases in a linear fashion as the duty cycle increases. For a duty cycle between 10% and 50% the scaler function is substantially constant as the duty cycle increases. Above 50%, the scaler function increases once again in a substantially linear manner with respect to the increasing duty cycle. The gradients of the two linear portions of the scaler function are substantially different to each other, with the second linear portion having a shallower gradient than the first.

By applying the scaler function to the measured parameter, the controller 36 is advantageously arranged to account for the fact that the conversion of pressure amplitude to the DEF mass value is not constant over varying operating conditions of the injector 24. Thus, the calibration module 42 is arranged to conveniently determine calibrated parameter values which accurately correspond to the mass of DEF being injected by the injector for a given activation period.

Finally, the calibrated parameter values are used by the determination module 44 of the controller 36 to determine a determined flow rate by dividing the DEF mass value by the activation period.

The examples described herein are representative only and the skilled reader will appreciate other specific architectures are possible. Moreover, the components of the DEF delivery system and the vehicle exhaust system are conventional and as such would be familiar to the skilled reader. For example, the diagram of Figure 1 should be taken as a representation of an exemplary DEF delivery system 12, only. Alternative configurations of DEF delivery systems are known and it is expected that other known components may be incorporated in addition to or as alternatives to the components shown and described in Figure 1. Such changes would be within the capabilities of the skilled person. In particular, additional components arranged to cool the injector would be expected to be incorporated in the DEF delivery system depending upon the location of the injector 24 with respect to the vehicle exhaust.

Furthermore, the monitoring module 40, the calibration module 42, the determination module 44 and the diagnostic module 46 are each provided as algorithmic instances on a processor of the controller 36. The processor is arranged to carry out the functions of each module in response to a suitable demand or instruction. Alternatively, each of the controller's modules 40, 42, 44 and 46 may be provided within any number of separate physical processing units, as would be readily understood by the skilled person.

It will also be appreciated that suitable connection apparatus may be provided to interconnect the controller 36 and the various components of the DEF delivery system 12. The interconnections may be direct or 'point to point' connections, or may be part of a local area network (LAN) operated under a suitable protocol (CAN-bus or Ethernet for example). Also, it should be appreciated that rather than using cabling, the control commands may be transmitted wirelessly over a suitable wireless network, for example operating under WiFi^{™} or ZigBee^{™} standards (IEEE802.11 and 802.15.4 respectively).

## Claims

1. A diesel emission fluid (DEF) delivery system controller (36) for diagnosing the operation of a DEF delivery system (12) comprising a source of DEF (20) connected to an injector (24) for injecting DEF into a vehicle exhaust after-treatment system (10), **characterized in that** the controller (36) comprises
an input (48) arranged to receive a pressure sensor signal (55) indicative of the pressure of DEF within the DEF delivery system (12);
a monitoring module (40) arranged to monitor a measurable parameter of the pressure sensor signal (55);
a calibration module (42) arranged to calibrate the measurable parameter based on a determined characteristic of the DEF delivery system to determine a calibrated parameter of the pressure sensor signal;
a determination module (44) arranged to determine a predicted DEF flow-rate being injected into the exhaust after-treatment system based on the calibrated parameter of the pressure sensor signal (55);
a diagnostic module (46) arranged to determine a diagnostic signal (64) to indicate an operating condition of the injector (24) based on a comparison between the predicted DEF flow-rate and a threshold DEF flow-rate value corresponding to a normal operation state for the DEF delivery system; and
an output (50) arranged to output the diagnostic signal;
wherein the measurable parameter comprises a moving root mean squared (RMS) value of the pressure sensor signal and the determined characteristic comprises a minimum RMS value corresponding to when a demand for the flow of DEF by the vehicle exhaust after-treatment system (10) is at a minimum threshold value; and
wherein the calibration module (42) is arranged to subtract the minimum RMS value from the moving RMS value in order to determine the calibrated parameter, the calibration module (42) being arranged to determine the minimum RMS value by measuring the moving RMS value over a predetermined period when the DEF flow demand is less than 10 mg/s.

2. A diesel emission fluid (DEF) delivery system controller (36) for diagnosing the operation of a DEF delivery system (12) comprising a source of DEF (20) connected to an injector (24) for injecting DEF into a vehicle exhaust after-treatment system (10), **characterized in that** the controller (36) comprises
an input (48) arranged to receive a pressure sensor signal (55) indicative of the pressure of DEF within the DEF delivery system (12);
a monitoring module (40) arranged to monitor a measurable parameter of the pressure sensor signal (55);
a calibration module (42) arranged to calibrate the measurable parameter based on a determined characteristic of the DEF delivery system to determine a calibrated parameter of the pressure sensor signal;
a determination module (44) arranged to determine a predicted DEF flow-rate being injected into the exhaust after-treatment system based on the calibrated parameter of the pressure sensor signal (55);
a diagnostic module (46) arranged to determine a diagnostic signal (64) to indicate an operating condition of the injector (24) based on a comparison between the predicted DEF flow-rate and a threshold DEF flow-rate value corresponding to a normal operation state for the DEF delivery system; and
an output (50) arranged to output the diagnostic signal;
wherein the measurable parameter comprises an amplitude value corresponding to the change in pressure during an injection of DEF into the vehicle exhaust after-treatment system (10) by the injector (24) and the calibration module (42) is arranged to apply a scaler function to the amplitude value in order to calculate a mass of DEF being injected by the injector (24) during each injection event.

3. A controller according to claim 2, wherein the scaler function comprises information indicative of the mass of DEF being injected by the injector (24) as a function of the injector duty cycle, the calibration module (42) being arranged to determine the scaler function from a lookup table.

4. A DEF delivery system comprising an injector (24) and the controller (36) according to any one of claims 1 to 3.

5. A method of diagnosing the operation of a diesel emission fluid (DEF) delivery system (12) comprising a source of DEF (20) connected to an injector (24) for injecting DEF into a vehicle exhaust after-treatment system (10), the method comprising:
receiving a pressure sensor signal (55) indicative of the pressure of DEF within the DEF delivery system;
monitoring a measurable parameter of the pressure sensor signal (55);
calibrating the measurable parameter based on a determined characteristic of the DEF delivery system (12) to determine a calibrated parameter of the pressure sensor signal (55);
determining a flow-rate of the DEF being injected into the exhaust after-treatment system (10) based on the calibrated parameter of the pressure sensor signal (55); and
diagnosing an operating condition of the injector (24) based on a comparison between the determined DEF flow-rate and a threshold DEF flow-rate value corresponding to a normal operation state for the DEF delivery system;
wherein the measurable parameter comprises a moving root mean squared (RMS) value of the pressure sensor signal (55) and the determined characteristic comprises a minimum RMS value corresponding to when a demand for the flow of DEF by the vehicle exhaust after-treatment system (10) is at a minimum threshold value;
wherein calibrating the measurable parameter comprises subtracting the minimum RMS value from the moving RMS value to determine the calibrated parameter; and
wherein calibrating the measurable parameter comprises determining the minimum RMS value by measuring the moving RMS value over a predetermined period when the DEF flow demand is substantially less than 10 mg/s.

6. A method of diagnosing the operation of a diesel emission fluid (DEF) delivery system (12) comprising a source of DEF (20) connected to an injector (24) for injecting DEF into a vehicle exhaust after-treatment system (10), the method comprising:
receiving a pressure sensor signal (55) indicative of the pressure of DEF within the DEF delivery system;
monitoring a measurable parameter of the pressure sensor signal (55);
calibrating the measurable parameter based on a determined characteristic of the DEF delivery system (12) to determine a calibrated parameter of the pressure sensor signal (55);
determining a flow-rate of the DEF being injected into the exhaust after-treatment system (10) based on the calibrated parameter of the pressure sensor signal (55); and
diagnosing an operating condition of the injector (24) based on a comparison between the determined DEF flow-rate and a threshold DEF flow-rate value corresponding to a normal operation state for the DEF delivery system;
wherein the measurable parameter comprises an amplitude value corresponding to the change in pressure during an injection of DEF into the vehicle exhaust after-treatment system (10) by the injector (24); and
wherein calibrating the measurable parameter comprises applying a scaler function to the amplitude value in order to calculate a mass of DEF being injected by the injector (24) during each injection event.

7. A method according to claim 6, wherein the scaler function comprises information indicative of the mass of DEF being injected by the injector (24) as a function of the injector duty cycle.

8. A method according to claims 6 or 7, wherein the step of calibrating the measurable parameter comprises determining the scaler function from a lookup table.

9. A method according to any one of claims 5 to 8, wherein the input comprises pressure sensor information associated with the pressure of DEF flowing within a conduit (22) that connects the DEF source (20) to the injector (24).

10. A method according to any one of claims 5 to 9, the method comprising controlling, in the event that the determined flow rate deviates from a predetermined flow rate, a display means to indicate an operating state of an injector to inject DEF into the vehicle exhaust after-treatment system (10) based on the determined DEF flow-rate.

## Patentansprüche

1. Steuereinheit (36) für ein Dieselabgasfluidzufuhrsystem (DEF-Zufuhrsystem) zum Diagnostizieren des Betriebs eines DEF-Zufuhrsystems (12), das eine Quelle von DEF (20) umfasst, die mit einem Einspritzventil (24) zum Einspritzen von DEF in ein Abgasnachbehandlungssystem (10) eines Fahrzeugs verbunden ist, **dadurch gekennzeichnet, dass** die Steuereinheit (36) umfasst
einen Eingang (48), der dazu eingerichtet ist, um ein Drucksensorsignal (55) zu empfangen, das den DEF-Druck in dem DEF-Zufuhrsystem (12) angibt;
ein Überwachungsmodul (40), das dazu eingerichtet ist, um einen messbaren Parameter des Drucksensorsignals (55) zu überwachen;
ein Kalibrierungsmodul (42), das dazu eingerichtet ist, um den messbaren Parameter basierend auf einer ermittelten Eigenschaft des DEF-Zufuhrsystems zu kalibrieren, um einen kalibrierten Parameter des Drucksensorsignals zu ermitteln;
ein Ermittlungsmodul (44), das dazu eingerichtet ist, um eine vorhergesagte DEF-Durchflussmenge zu ermitteln, die basierend auf dem kalibrierten Parameter des Drucksensorsignals (55) in das Abgasnachbehandlungssystem eingespritzt wird;
ein Diagnosemodul (46), das dazu eingerichtet ist, um ein Diagnosesignal (64) zu ermitteln, um basierend auf einem Vergleich zwischen der vorhergesagten DEF-Durchflussmenge und einem Schwellenwert der DEF-Durchflussmenge, der einem normalen Betriebszustand des DEF-Zufuhrsystems entspricht, einen Betriebszustand des Einspritzventils (24) anzugeben; und
einen Ausgang (50), der dazu eingerichtet ist, um das Diagnosesignal auszugeben;
wobei der messbare Parameter einen gleitenden quadratischen Mittelwert (RMS-Wert) des Drucksensorsignals umfasst und die ermittelte Charakteristik einen minimalen RMS-Wert umfasst, der dem Zeitpunkt entspricht, zu dem ein Bedarf bezüglich des Durchflusses von DEF durch das Abgasnachbehandlungssystem (10) des Fahrzeugs einen minimalen Schwellenwert erreicht hat; und
wobei das Kalibrierungsmodul (42) dazu eingerichtet ist, um den minimalen RMS-Wert von dem gleitenden RMS-Wert zu subtrahieren, um den kalibrierten Parameter zu ermitteln, wobei das Kalibrierungsmodul (42) dazu eingerichtet ist, um den minimalen RMS-Wert durch Messen des gleitenden RMS-Wertes über einen vorgegebenen Zeitraum zu ermitteln, wenn der DEF-Durchflussbedarf weniger als 10 mg/s beträgt.

2. Steuereinheit (36) für ein Dieselabgasfluidzufuhrsystem (DEF-Zufuhrsystem) zum Diagnostizieren des Betriebs eines DEF-Zufuhrsystems (12), das eine Quelle von DEF (20) umfasst, die mit einem Einspritzventil (24) zum Einspritzen von DEF in ein Abgasnachbehandlungssystem (10) eines Fahrzeugs verbunden ist, **dadurch gekennzeichnet, dass** die Steuereinheit (36) umfasst
einen Eingang (48), der dazu eingerichtet ist, um ein Drucksensorsignal (55) zu empfangen, das den DEF-Druck in dem DEF-Zufuhrsystem (12) angibt;
ein Überwachungsmodul (40), das dazu eingerichtet ist, um einen messbaren Parameter des Drucksensorsignals (55) zu überwachen;
ein Kalibrierungsmodul (42), das dazu eingerichtet ist, um den messbaren Parameter basierend auf einer ermittelten Eigenschaft des DEF-Zufuhrsystems zu kalibrieren, um einen kalibrierten Parameter des Drucksensorsignals zu ermitteln;
ein Ermittlungsmodul (44), das dazu eingerichtet ist, um eine vorhergesagte DEF-Durchflussmenge zu ermitteln, die basierend auf dem kalibrierten Parameter des Drucksensorsignals (55) in das Abgasnachbehandlungssystem eingespritzt wird;
ein Diagnosemodul (46), das dazu eingerichtet ist, um ein Diagnosesignal (64) zu ermitteln, um basierend auf einem Vergleich zwischen der vorhergesagten DEF-Durchflussmenge und einem Schwellenwert der DEF-Durchflussmenge, der einem normalen Betriebszustand des DEF-Zufuhrsystems entspricht, einen Betriebszustand des Einspritzventils (24) anzugeben; und
einen Ausgang (50), der dazu eingerichtet ist, um das Diagnosesignal auszugeben;
wobei der messbare Parameter einen Amplitudenwert umfasst, der der Druckänderung während einer Einspritzung von DEF in das Abgasnachbehandlungssystem (10) des Fahrzeugs durch das Einspritzventil (24) entspricht, und das Kalibrierungsmodul (42) dazu eingerichtet ist, um eine Skalierungsfunktion auf den Amplitudenwert anzuwenden, um eine Masse von DEF zu berechnen, die durch das Einspritzventil (24) während jedes Einspritzungsereignisses eingespritzt wird.

3. Steuereinheit nach Anspruch 2, wobei die Skalierungsfunktion Informationen umfasst, die die Masse des durch das Einspritzventil (24) eingespritzten DEF als Funktion der Einspritzventil-Einschaltdauer angeben, wobei das Kalibrierungsmodul (42) dazu eingerichtet ist, um die Skalierungsfunktion aus einer Nachschlagetabelle zu ermitteln.

4. DEF-Zufuhrsystem, das ein Einspritzventil (24) und die Steuereinheit (36) nach einem der Ansprüche 1 bis 3 umfasst.

5. Verfahren zum Diagnostizieren des Betriebs eines Dieselabgasfluidzufuhrsystems (12) (DEF-Zufuhrsystems), das eine Quelle von DEF (20) umfasst, die mit einem Einspritzventil (24) zum Einspritzen von DEF in ein Abgasnachbehandlungssystem (10) eines Fahrzeugs verbunden ist, wobei das Verfahren umfasst:
Empfangen eines Drucksensorsignals (55) das den DEF-Druck in dem DEF-Zufuhrsystem angibt;
Überwachen eines messbaren Parameters des Drucksensorsignals (55);
Kalibrieren des messbaren Parameters basierend auf einer ermittelten Eigenschaft des DEF-Zufuhrsystems (12), um einen kalibrierten Parameter des Drucksensorsignals (55) zu ermitteln;
Ermitteln einer Durchflussmenge des in das Abgasnachbehandlungssystem (10) eingespritzten DEF basierend auf dem kalibrierten Parameter des Drucksensorsignals (55); und
Diagnostizieren eines Betriebszustands des Einspritzventils (24) basierend auf einem Vergleich zwischen der ermittelten DEF-Durchflussmenge und einem DEF-Durchflussmengenschwellenwert, der einem normalen Betriebszustand des DEF-Zufuhrsystems entspricht;
wobei der messbare Parameter einen gleitenden quadratischen Mittelwert (RMS-Wert) des Drucksensorsignals (55) umfasst und die ermittelte Charakteristik einen minimalen RMS-Wert umfasst, der dem Zeitpunkt entspricht, zu dem ein Bedarf bezüglich des Durchflusses von DEF durch das Abgasnachbehandlungssystem (10) des Fahrzeugs einen minimalen Schwellenwert erreicht hat;
wobei das Kalibrieren des messbaren Parameters das Subtrahieren des minimalen RMS-Wertes vom gleitenden RMS-Wert umfasst, um den kalibrierten Parameter zu ermitteln; und
wobei das Kalibrieren des messbaren Parameters das Ermitteln des minimalen RMS-Wertes durch Messen des gleitenden RMS-Wertes über einen vorgegebenen Zeitraum umfasst, wenn der DEF-Durchflussbedarf wesentlich weniger als 10 mg/s beträgt.

6. Verfahren zum Diagnostizieren des Betriebs eines Dieselabgasfluidzufuhrsystems (12) (DEF-Zufuhrsystems), das eine Quelle von DEF (20) umfasst, die mit einem Einspritzventil (24) zum Einspritzen von DEF in ein Abgasnachbehandlungssystem (10) eines Fahrzeugs verbunden ist, wobei das Verfahren umfasst:
Empfangen eines Drucksensorsignals (55) das den DEF-Druck in dem DEF-Zufuhrsystem angibt;
Überwachen eines messbaren Parameters des Drucksensorsignals (55);
Kalibrieren des messbaren Parameters basierend auf einer ermittelten Eigenschaft des DEF-Zufuhrsystems (12), um einen kalibrierten Parameter des Drucksensorsignals (55) zu ermitteln;
Ermitteln einer Durchflussmenge des in das Abgasnachbehandlungssystem (10) eingespritzten DEF basierend auf dem kalibrierten Parameter des Drucksensorsignals (55); und
Diagnostizieren eines Betriebszustands des Einspritzventils (24) basierend auf einem Vergleich zwischen der ermittelten DEF-Durchflussmenge und einem DEF-Durchflussmengenschwellenwert, der einem normalen Betriebszustand des DEF-Zufuhrsystems entspricht;
wobei der messbare Parameter einen Amplitudenwert umfasst, der der Druckänderung während einer Einspritzung von DEF in das Abgasnachbehandlungssystem (10) des Fahrzeugs durch das Einspritzventil (24) entspricht; und
wobei das Kalibrieren des messbaren Parameters das Anwenden einer Skalierungsfunktion auf den Amplitudenwert umfasst, um eine Masse von DEF zu berechnen, die während jedes Einspritzereignisses durch das Einspritzventil (24) eingespritzt wird.

7. Verfahren nach Anspruch 6, wobei die Skalierungsfunktion Informationen umfasst, die die Masse des durch das Einspritzventil (24) eingespritzten DEF als Funktion der Einspritzventileinschaltdauer angeben.

8. Verfahren nach Anspruch 6 oder 7, wobei der Schritt des Kalibrierens des messbaren Parameters das Ermitteln der Skalierungsfunktion aus einer Nachschlagetabelle umfasst.

9. Verfahren nach einem der Ansprüche 5 bis 8, wobei die Eingabe Drucksensorinformationen umfasst, die dem Druck des DEF zugeordnet sind, das innerhalb einer Leitung (22) strömt, die die DEF-Quelle (20) mit dem Einspritzventil (24) verbindet.

10. Verfahren nach einem der Ansprüche 5 bis 9, wobei das Verfahren für den Fall, dass die ermittelte Durchflussmenge von einer vorgegebenen Durchflussmenge abweicht, das Steuern eines Anzeigemittels umfasst, um einen Betriebszustand eines Einspritzventils zum Einspritzen von DEF in das Abgasnachbehandlungssystem (10) des Fahrzeugs basierend auf der ermittelten DEF-Durchflussmenge anzuzeigen.

## Revendications

1. Dispositif de commande (36) de système de distribution de fluide d'émission diesel (DEF) permettant de diagnostiquer le fonctionnement d'un système de distribution DEF (12) comprenant une source de DEF (20) reliée à un injecteur (24) permettant d'injecter du DEF dans un système de post-traitement de gaz d'échappement de véhicule (10), **caractérisé en ce que** le dispositif de commande (36) comprend
une entrée (48) conçue pour recevoir un signal de capteur de pression (55) indiquant la pression de DEF dans le système de distribution de DEF (12) ;
un module de surveillance (40) conçu pour surveiller un paramètre mesurable du signal de capteur de pression (55) ;
un module d'étalonnage (42) conçu pour étalonner le paramètre mesurable sur la base d'une caractéristique déterminée du système de distribution de DEF afin de déterminer un paramètre étalonné du signal de capteur de pression ;
un module de détermination (44) conçu pour déterminer un débit prédit de DEF injecté dans le système de post-traitement de gaz d'échappement sur la base du paramètre étalonné du signal de capteur de pression (55) ;
un module de diagnostic (46) conçu pour déterminer un signal de diagnostic (64) afin d'indiquer un état de fonctionnement de l'injecteur (24) sur la base d'une comparaison entre le débit de DEF prévu et une valeur seuil de débit de DEF correspondant à un état de fonctionnement normal du système de distribution de DEF ; et
une sortie (50) conçue pour émettre le signal de diagnostic ;
dans lequel le paramètre mesurable comprend une valeur quadratique moyenne (RMS) mobile du signal de capteur de pression et la caractéristique déterminée comprend une valeur RMS minimale correspondant au moment où une demande du flux de DEF par le système de post-traitement de gaz d'échappement de véhicule (10) est à une valeur seuil minimale ; et
dans lequel le module d'étalonnage (42) est conçu pour soustraire la valeur RMS minimale de la valeur RMS mobile afin de déterminer le paramètre étalonné, le module d'étalonnage (42) étant conçu pour déterminer la valeur RMS minimale en mesurant la valeur RMS mobile sur une période prédéterminée lorsque la demande de flux de DEF est inférieure à 10 mg/s.

2. Dispositif de commande (36) de système de distribution de fluide d'émission diesel (DEF) permettant de diagnostiquer le fonctionnement d'un système de distribution DEF (12) comprenant une source de DEF (20) reliée à un injecteur (24) permettant d'injecter du DEF dans un système de post-traitement de gaz d'échappement de véhicule (10), **caractérisé en ce que** le dispositif de commande (36) comprend
une entrée (48) conçue pour recevoir un signal de capteur de pression (55) indiquant la pression de DEF dans le système de distribution de DEF (12) ;
un module de surveillance (40) conçu pour surveiller un paramètre mesurable du signal de capteur de pression (55) ;
un module d'étalonnage (42) conçu pour étalonner le paramètre mesurable sur la base d'une caractéristique déterminée du système de distribution de DEF afin de déterminer un paramètre étalonné du signal de capteur de pression ;
un module de détermination (44) conçu pour déterminer un débit prédit de DEF injecté dans le système de post-traitement de gaz d'échappement sur la base du paramètre étalonné du signal de capteur de pression (55) ;
un module de diagnostic (46) conçu pour déterminer un signal de diagnostic (64) afin d'indiquer un état de fonctionnement de l'injecteur (24) sur la base d'une comparaison entre le débit de DEF prévu et une valeur seuil de débit de DEF correspondant à un état de fonctionnement normal du système de distribution de DEF ; et
une sortie (50) conçue pour émettre le signal de diagnostic ;
dans lequel le paramètre mesurable comprend une valeur d'amplitude correspondant au changement de pression lors de l'injection de DEF dans le système de post-traitement de gaz d'échappement de véhicule (10) par l'injecteur (24) et le module d'étalonnage (42) est conçu pour appliquer une fonction de mise à l'échelle à la valeur d'amplitude afin de calculer une masse de DEF injectée par l'injecteur (24) pendant chaque événement d'injection.

3. Dispositif de commande selon la revendication 2, dans lequel la fonction de mise à l'échelle comprend des informations indiquant la masse de DEF injectée par l'injecteur (24) en fonction du cycle de travail de l'injecteur, le module d'étalonnage (42) étant conçu pour déterminer la fonction de mise à l'échelle à partir d'un tableau de correspondance.

4. Système de distribution de DEF comprenant un injecteur (24) et le dispositif de commande (36) selon l'une quelconque des revendications 1 à 3.

5. Procédé de diagnostic du fonctionnement d'un système de distribution (12) de fluide d'émission diesel (DEF) comprenant une source de DEF (20) reliée à un injecteur (24) permettant d'injecter du DEF dans un système de post-traitement de gaz d'échappement de véhicule (10), le procédé comprenant :
la réception d'un signal de capteur de pression (55) indiquant la pression de DEF dans le système de distribution de DEF ;
la surveillance d'un paramètre mesurable du signal de capteur de pression (55) ;
l'étalonnage du paramètre mesurable sur la base d'une caractéristique déterminée du système de distribution de DEF (12) afin de déterminer un paramètre étalonné du signal de capteur de pression (55) ;
la détermination d'un débit du DEF injecté dans le système de post-traitement de gaz d'échappement (10) sur la base du paramètre étalonné du signal de capteur de pression (55) ; et
le diagnostic d'un état de fonctionnement de l'injecteur (24) sur la base d'une comparaison entre le débit de DEF déterminé et une valeur seuil de débit de DEF correspondant à un état de fonctionnement normal du système de distribution de DEF ;
dans lequel le paramètre mesurable comprend une valeur quadratique moyenne (RMS) mobile du signal de capteur de pression (55) et la caractéristique déterminée comprend une valeur RMS minimale correspondant au moment où une demande du flux de DEF par le système de post-traitement de gaz d'échappement de véhicule (10) est à une valeur seuil minimale ;
dans lequel l'étalonnage du paramètre mesurable comprend la soustraction de la valeur RMS minimale de la valeur RMS mobile afin de déterminer le paramètre étalonné ; et
dans lequel l'étalonnage du paramètre mesurable comprend la détermination de la valeur RMS minimale en mesurant la valeur RMS mobile sur une période prédéterminée lorsque la demande de débit DEF est sensiblement inférieure à 10 mg/s.

6. Procédé de diagnostic du fonctionnement d'un système de distribution (12) de fluide d'émission diesel (DEF) comprenant une source de DEF (20) reliée à un injecteur (24) permettant d'injecter du DEF dans un système de post-traitement de gaz d'échappement de véhicule (10), le procédé comprenant :
la réception d'un signal de capteur de pression (55) indiquant la pression de DEF dans le système de distribution de DEF ;
la surveillance d'un paramètre mesurable du signal de capteur de pression (55) ;
l'étalonnage du paramètre mesurable sur la base d'une caractéristique déterminée du système de distribution de DEF (12) afin de déterminer un paramètre étalonné du signal de capteur de pression (55) ;
la détermination d'un débit du DEF injecté dans le système de post-traitement de gaz d'échappement (10) sur la base du paramètre étalonné du signal de capteur de pression (55) ; et
le diagnostic d'un état de fonctionnement de l'injecteur (24) sur la base d'une comparaison entre le débit de DEF déterminé et une valeur seuil de débit de DEF correspondant à un état de fonctionnement normal du système de distribution de DEF ;
dans lequel le paramètre mesurable comprend une valeur d'amplitude correspondant au changement de pression pendant un injection de DEF dans le système de post-traitement de gaz d'échappement de véhicule (10) par l'injecteur (24) ; et
dans lequel l'étalonnage du paramètre mesurable comprend l'application d'une fonction de mise à l'échelle à la valeur d'amplitude afin de calculer une masse de DEF injectée par l'injecteur (24) pendant chaque événement d'injection.

7. Procédé selon la revendication 6, dans lequel la fonction de mise à l'échelle comprend des informations indiquant la masse de DEF injectée par l'injecteur (24) en fonction du cycle de travail de l'injecteur.

8. Procédé selon les revendications 6 ou 7, dans lequel l'étape d'étalonnage du paramètre mesurable comprend la détermination de la fonction de mise à l'échelle à partir d'une table de correspondance.

9. Procédé selon l'une quelconque des revendications 5 à 8, dans lequel l'entrée comprend des informations de capteur de pression associées à la pression de DEF s'écoulant dans un conduit (22) qui relie la source de DEF (20) à l'injecteur (24).

10. Procédé selon l'une quelconque des revendications 5 à 9, le procédé comprenant la commande, dans le cas où le débit déterminé s'écarte d'un débit prédéterminé, d'un moyen d'affichage afin d'indiquer un état de fonctionnement d'un injecteur pour injecter du DEF dans le système de post-traitement de gaz d'échappement de véhicule (10) sur la base du débit de DEF déterminé.
